# EUROPEAN PATENT APPLICATION

(11) **EP 4 503 625 A1**
(43) Date of publication of application: **05.02.2025**
(21) Application number: 23777863.4
(22) Date of filing: 16.03.2023
(51) Int. Cl.: H04N 21/434, H04N 21/439

(54) **METHOD AND APPARATUS FOR GENERATING MATERIAL PACKAGE, VIDEO EDITING METHOD AND APPARATUS, AND DEVICE AND MEDIUM**

(30) Priority: 29.03.2022 CN 202210320553
(71) Applicant: Beijing Zitiao Network Technology Co., Ltd., Beijing 100190 (CN)
(72) Inventor: TAN, Weilin, Beijing 100028 (CN); ZHANG, Xinghua, Beijing 100028 (CN); LIU, Chipeng, Beijing 100028 (CN); ZENG, Lifeng, Beijing 100028 (CN); HUANG, Jihao, Beijing 100028 (CN); YANG, Yuning, Beijing 100028 (CN)
(74) Representative: Dentons UK and Middle East LLP
(86) International application number: PCT/CN2023/081849
(87) International publication number: WO 2023/185488

(57) **Abstract**

The embodiments of the present disclosure relate to a method and apparatus for generating a material package, a video editing method and apparatus, and a device and a medium. The method for generating a material package comprises: acquiring an editing record file of a target video, wherein the target video is a video which is obtained by synthesizing specified material into an initial video by means of an editing operation, and the editing record file comprises editing record information for recording the editing operation, the initial video and the specified material; acquiring target material and application information of the target material on the basis of the editing record file, wherein the application information includes the editing record information of the target material in the target video, and the target material belongs to the specified material; and on the basis of the target material and the application information thereof, generating a material package for video editing.

## Description

### CROSS-REFERENCE TO RELATED APPLICATIONS

The present application is based on and claims priority of China Patent Application No. 202210320553.X, filed on March 29, 2022, the disclosure of which is incorporated by reference herein in its entirety.

### TECHNICAL FIELD

The present disclosure relates to the technical field of data processing, in particular to a method for generating a material package, a video editing method, an apparatus, a device, and a medium.

### BACKGROUND

A video creator usually uses a material such as text, a sticker, music, a special effect, etc. in the process of creating a video to enhance video performance. In order to ensure the effect, the material used in the same video try to adopt the same theme or the same style. Since it is difficult to find a material with the same theme or style, a material package has been created. The creator can pack materials that have the same theme or style and share them with other users.

### SUMMARY

An embodiment of the present disclosure provides a method for generating a material package, applied to a first client, comprising: obtaining an editing record file of a target video, wherein the target video is a video obtained by synthesizing a specified material into an initial video through an editing operation, and the editing record file comprises editing record information for recording the editing operation, as well as the initial video and the specified material; obtaining a target material and application information of the target material based on the editing record file, wherein the application information comprises editing record information of the target material in the target video, and the target material belongs to the specified material; and generating a material package for video editing based on the target material and the application information of the target material.

An embodiment of the present disclosure further provides a video editing method, applied to a second client, comprising: obtaining a video to be edited; obtaining a specified material package corresponding to a material package application instruction in response to receiving the material package application instruction, wherein the specified material package is generated by any of the above methods for generating the material package; and editing the video to be edited based on the specified material package.

An embodiment of the present disclosure further provides an apparatus for generating a material package, applied to a first client, comprising: a file obtaining module configured to obtain an editing record file of a target video, wherein the target video is a video obtained by synthesizing a specified material into an initial video through an editing operation, and the editing record file comprises editing record information for recording the editing operation, as well as the initial video and the specified material; an information obtaining module configured to obtain a target material and application information of the target material based on the editing record file, wherein the application information comprises editing record information of the target material in the target video, and the target material belongs to the specified material; and a material package generation module configured to generate a material package for video editing based on the target material and the application information of the target material.

An embodiment of the present disclosure further provides a video editing apparatus, applied to a second client, comprising: a video obtaining module configured to obtain a video to be edited; a material package obtaining module configured to obtain a specified material package corresponding to a material package application instruction in response to receiving the material package application instruction, wherein the specified material package is generated by any of the above methods for generating the material package; and a video editing module configured to edit the video to be edited based on the specified material package.

An embodiment of the present disclosure further provides an electronic device, comprising: a processor; and a memory configured to store executable instructions of the processor; wherein the processor is configured to read the executable instructions from the memory and execute the executable instructions to implement the method for generating the material package or the video editing method provided in the embodiments of the present disclosure.

An embodiment of the present disclosure further discloses a computer-readable storage medium on which a computer program is stored, wherein the computer program is configured to perform the method for generating the material package or the video editing method provided in the embodiments of the present disclosure.

An embodiment of the present disclosure further provides a computer program, comprising: instructions that, when executed by a processor, cause the processor to perform the method for generating the material package or the video editing method provided in the embodiments of the present disclosure.

It should be understood that the contents described in this section are not intended to identify critical or important features of the embodiments of the present disclosure, nor are they intended to be used to limit the scope of the present disclosure. Other features of the present disclosure will be readily understood through the following description.

### BRIEF DESCRIPTION OF THE DRAWINGS

Herein, the accompanying drawings, which are incorporated in and constitute a part of this specification, illustrate embodiments of the present disclosure and, together with the description, serve to explain the principles of the present disclosure.

In order to more clearly explain the embodiments of the present disclosure or the technical solutions in the prior art, a brief introduction will be given below for the drawings required to be used in the description of the embodiments or the prior art. It is obvious that, for a person skilled in the art, he or she may also acquire other drawings according to such drawings on the premise that no inventive effort is involved.
FIG. 1 is a flowchart of a method for generating a material package provided by an embodiment of the present disclosure;
FIG. 2 is a schematic diagram of a material package protocol provided by an embodiment of the present disclosure;
FIG. 3 is a schematic diagram of a material package generation process provided by an embodiment of the present disclosure;
FIG. 4 is a schematic diagram of a local material processing process provided by an embodiment of the present disclosure;
FIG. 5 is a flowchart of a video editing method provided by an embodiment of the present disclosure;
FIG. 6 is a schematic diagram of a material package application process provided by an embodiment of the present disclosure;
FIG. 7 is a schematic diagram of a structure of an apparatus for generating a material package provided by an embodiment of the present disclosure;
FIG. 8 is a schematic diagram of a structure of a video editing apparatus provided by an embodiment of the present disclosure;
FIG. 9 is a schematic diagram of a structure of an electronic device provided by an embodiment of the present disclosure.

### DETAILED DESCRIPTION

In order to better understand the above objects, features and advantages of the present disclosure, the solution of the present disclosure will be further described below. It should be noted that, in the case of no conflict, the embodiments and the features of the embodiments of the present disclosure may be combined with each other.

Many specific details are set forth in the following description to facilitate a full understanding of the present disclosure, but the present disclosure can also be implemented in other ways different from those described herein. Obviously, embodiments described in the description are only some embodiments of the present disclosure, and are not all of embodiments thereof.

The inventors of the present disclosure have found that in the related art, the method used by the creator to create a material package is relatively cumbersome. For example, an effect video need be produced in advance, and then a material is extracted from the effect video to obtain the material package.

In view of this, the present disclosure provides a method for generating a material package to simplify the production process of the material package.

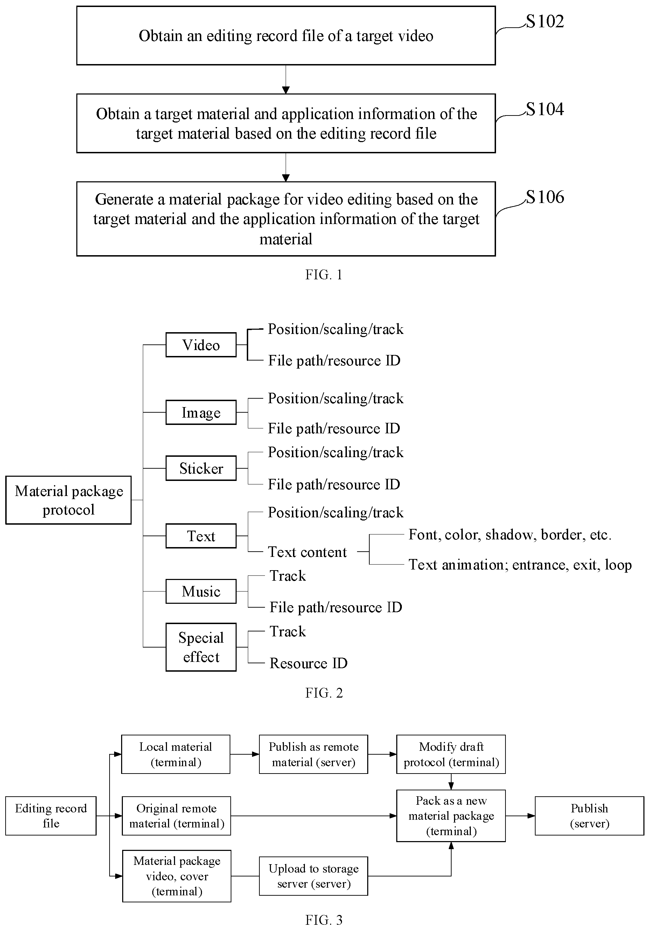

FIG. 1 is a flowchart of a method for generating a material package provided by an embodiment of the present disclosure. The method can be applied to a first client, wherein the first client may be implemented as a mobile phone, a computer, etc. The implementation of the first client is not specifically limited in the embodiments of the present disclosure. A production end user (such as a creator of a material package) can use the first client to create a material package. As shown in FIG. 1, the method mainly comprises the following steps S102 to S106.

In step S102, an editing record file of a target video is obtained. The target video is a video obtained by synthesizing a specified material into an initial video through an editing operation.

In some embodiments, the editing record file of the target video may be obtained in response to receiving a user-initiated material package generation instruction. The target video is a video obtained by synthesizing a specified material into an initial video through an editing operation. That is to say, the target video can be a video obtained by the user (a creator of a material package) by editing an initial video using the specified material of a material package to be produced. The target video can also be referred to as an example video of the material package.

In some embodiments of the present disclosure, the editing record file comprises editing record information for recording the editing operation, as well as the initial video and the specified material. For example, in a video editing software in an embodiment of the present disclosure, a user's complete editing process for creating a video can be recorded, so that a sequence of editing operation for the initial video, the material used for each editing operation in the sequence of editing operation, and the specific way the material is used in the initial video can be obtained, thereby forming an editing record file. For example, the editing record file is a protocol used by the video editing software to record a editing status of a video, which can store all the information about a user's video editing process, such as an element added by the user in the video editing process, a parameter adjusted, and an operation performed by the user, and so on. When the user reopens the video, an editing record file corresponding to the video can be automatically read, thereby restoring the previous editing status.

In an embodiment of the present disclosure, instead of extracting materials from a video, the creator of the material package can directly obtain an editing record file of the video to generate a material package by the editing record file.

In step S104, a target material and application information of the target material are obtained based on the editing record file. The application information comprises editing record information of the target material in the target video.

Here, the target material belongs to the specified material. In some embodiments, all of the specified material can be used as the target material. Considering that the creator of the material package may not want to pack and share all the materials, it is also possible to only use a portion of the materials selected by the creator of the material package from the specified material as the target material. The target material can be determined based on the user's needs without any limitation. Based on a given editing record file, the application information of the target material can be directly extracted from the file. The application information comprises the editing record information of the target material in the target video. For example, the editing record information comprises one or more of position information, rotation information, scaling information, or track information. On this basis, the application information can further comprise an acquisition path of a target material. The acquisition path is used to indicate the way to obtain the material. For example, when a material is an uploaded local material, the acquisition path of the material can be a file acquisition path; when a material is a material downloaded from the network, the acquisition path of the material can be a network acquisition path.

In addition, the material in an embodiment of the present disclosure comprise but are not limited to one or more of a video, an image, a sticker, a text, music, a special effect, or a filter. The editing record information comprises, for example, one or more of location information, scaling information, and track information of a material in the video, which can be specifically determined based on a category of the material. For example, when the material is a video, an image, a sticker, or a text, corresponding application information can comprise the position information, the scaling information, and the track information. On this basis, when the material is an image, a sticker, or a text, the application information may further comprise the rotation information. When the material is music or a special effect, the corresponding application information may comprise the track information. The above are only examples and should not be considered as a limitation.

In step S106, a material package for video editing is generated based on the target material and the application information of the target material. After the target material and its application information are known, the first client can automatically perform packaging based on the target material and its application information to generate a material package for video editing. The generated material package can then be sent to a server enable the server to publish the material package on a specified platform. The sharing of the material package is implemented through the designated platform, so that other users can download and use the material package from the designated platform.

In summary, an embodiment of the present disclosure provides a method for generating a material package, applied to a first client, comprising: obtaining an editing record file of a target video, wherein the target video is a video obtained by synthesizing a specified material into an initial video through an editing operation, and the editing record file comprises editing record information for recording the editing operation, as well as the initial video and the specified material; obtaining a target material and application information of the target material based on the editing record file, wherein the application information comprises editing record information of the target material in the target video, and the target material belongs to the specified material; and generating a material package for video editing based on the target material and the application information of the target material. For the creator of the material package, there is no need to extract the material from the video one by one to create the material package. The material package can be generated directly based on the target material and application information in the editing record file of the video, simplifying the production process of the material package.

In some embodiments, the obtaining of the target material and the application information of the target material based on the editing record file can comprise the following steps (1) to (2).

In step (1), all of the specified material are used as the target material, or a material with a publishing license identifier in the target material is used as the target material. That is to say, in practical applications, the method can be implemented in two ways as follows.

In implementation example 1, all of the specified material are used as the target material. If not specified, all the specified material can be used as the target material by default.

In implementation example 2, a material with a publishing license identifier in the target material is used as the target material.In practical applications, a material checkbox can be provided to the creator, the creator can check a specified material to be used in the production of the target video and assign a publishing license identifier to the selected material. This approach fully accommodates the needs of the creator and publishes only those materials that the creator allows, while some private materials that the creator does not want to be widely shared may not be published.

The above implementation examples 1 and/or 2 can be flexibly selected according to the actual situation, and a user can also be given the options of "Publish all materials" and "Publish only some materials". When a user selects "Publish all materials ", the above implementation example 1 can be used, and when a user selects "Publish only some materials", the above implementation example 2 can be used. In particular, in the case where the target material contain a local material of the creator, the user (the creator of the material package) can assign a publishing license identifier to a specified material the user wants to publish by checking a material checkbox, which can fully respect the user's wishes and pack only the materials the user wants to upload. The local material refer to a material uploaded by the user through the first client, such as an image uploaded by the creator from a local album, a sticker, a video, or other materials uploaded by the creator from a local folder. In other words, the local material is not a material publicly downloaded from the network, but a material stored locally on the terminal. The creator can specify the material that can be packaged into the material package according to the needs, providing more flexibility.

In step (2), the editing record information of the target material in the target video recorded in the editing record file is used as the application information of the target material, wherein the editing record information comprises one or more of position information, rotation information, scaling information, or track information. In practical applications, different types of materials may correspond to different editing record information. Each type of material may correspond to one or more types of editing record information, which are not specifically limited here.

In order to effectively reduce the memory of the material package, the application information of the target material further comprises an acquisition path of the target material. On this basis, instead of directly packing the target material in the material package, an identifier and application information of the target material (comprising the acquisition path and editing record information of the target material) can be stored in the material package, so that a user of the material package can clearly know how to obtain the target material, and how to use the target material.

In the process of creating a material package, the creator of the material package often uses a personal original local material, such as original images, stickers, music, short videos, and so on, to provide new materials for other users. Therefore, the target material usually comprises at least one type of local material. In addition, in many cases, the creator of the material package utilizes not only the local material, but also a remote material. This means that the created material package contains not only the local material of the creator, but also the remote material (the original remote material) downloaded by the creator over the network, wherein the remote material is a material that is stored on a server and can be publicly downloaded. In an embodiment of the present disclosure, the material type (local/remote) of a target material can be directly identified and processed accordingly. For example, to reduce the memory of the material package, instead of storing the local material in the material package, the local material can first be published to a server as a new remote material, and then the material package only stores the identifiers of the original remote material and the new remote material (local material), as well as application information that comprises the material acquisition path and the editing record information. This processing method can produce a material package that is very small in size, making it easy to download and transmit.

Based on the above, an embodiment of the present disclosure provides a specific method for generating a material package for video editing based on the target material and the application information of the target material, which can be implemented through steps A to C below.

In step A, a local material in the target material is uploaded to a server to cause the server to convert the local material into a new remote material, wherein the remote material is a material stored in the server and publicly downloadable.

In practical applications, the local material in the target material can be automatically uploaded to a designated server, and then published by the server on a designated platform. The published local material is a new remote material. The storage and publication of the material can be performed by the same server or by different servers. For example, the local material is uploaded to a storage server, and then the storage server, on the basis of storing the local material, further sends the local material to a material server, and the material server publishes the local material on a designated platform.

In step B, a remote material identifier corresponding to the new remote material returned by the server is received, the acquisition path recorded in the application information of the local material is replaced with the remote material identifier of the new remote material, and replaced application information is used as the application information corresponding to the new remote material.

When the server publishes the local material as the remote material, it assigns a material identifier to the remote material. The material identifier can be referred to as the remote material identifier, or a resource ID, wherein the remote material identifier is identity of the remote material. Different remote materials correspond to different remote material identifiers. It can be understood that since the creator of the material package usually creates the material package using locally stored materials, a file acquisition path of the local material is generally recorded in the editing record file. If the local material is publicly published as a new remote material, other users who download the material package only need to know the remote material identifier of the remote material in the material package, and can download the corresponding remote material from the server using the remote material identifier, which enables other users to easily utilize the local material of the creator of the material package.

It should also be noted that the editing record information in the application information remains unchanged, that is, for the local material in the target material, its corresponding application information comprises the editing record information of the local material in the target video (referred to as a material editing record information) and the file acquisition path of the local material. After converting the local material to the remote material via the server, the application information corresponding to the remote material comprises the material editing record information described above and the remote material identifier corresponding to the remote material. In an embodiment of the present disclosure, both the remote material identifier and the file acquisition path can be used to characterize specific acquisition ways of the material, and both are expressions of the acquisition path of the target material contained in the application information.

In step C, the material package for the video editing is generated based on the new remote material and the application information of the new remote material, as well as an original remote material in the target material and the application information of the original remote material. The original remote material is a material downloaded by the first client from a server during the process of generating the target video.

Since the local material of the creator has been converted into the remote material that can be used by others, a material package for video editing can be directly generated based on the new remote material and the application information of the new remote material, as well as the original remote material and the application information of the original remote material. It can be understood that the materials in the material package obtained in the above method are all remote material, part of which are new remote materials published by the creator through the server from the local materials, and part of which are original remote materials downloaded by the creator through the network.

In the above method, the local material and the application information can be obtained directly based on the editing record file, and the local material can be published as the new remote material. The acquisition path in the application information of the local material can be replaced with the remote material identifier, while the rest of the application information remains unchanged. Finally, a material package can be generated based on the new remote material and the application information of the new remote material. For the creator of the material package, there is no need to extract materials from the video one by one to create the material package, which can simplify the production process of the material package. In addition, there is no need to store the material in the package, only an acquisition path and editing record information of the material need to be stored, which requires a relatively small amount of memory and is easy to download and transmit.

Based on the above, it can be considered that in an embodiment of the present disclosure, a material package protocol is redefined, wherein the material package protocol clearly indicates the application mode of the material. In other words, the material package protocol can also be understood as integrated content of the application information of the material described above, while the material package provided in the embodiment of the present disclosure comprises a set of materials and the material package protocol (i.e. the application information of the material). FIG. 2 shows a schematic diagram of a material package protocol, which illustrates application information corresponding to various materials that may be comprised in a material package. FIG. 2 briefly illustrates some material types, such as videos, images, stickers, text, music, special effects, etc., and application information corresponding to each material type. An file path is the acquisition path of the local material described above, a resource ID is the remote material identifier described above, and the file path/resource ID both indicate the acquisition way of material. It should be noted that FIG. 2 is only a simple example and should not be considered a limitation. In practical applications, the materials are not limited to those shown in FIG. 2. For example, the materials may further comprise filters, sound effects, etc. Moreover, the elements listed in FIG. 2 are optional and can be assembled, and may not necessarily be present simultaneously. These elements can be customized according to actual needs and the specific video editing software. In summary, the material package must contain all the information of the material so that the effect of each material can be fully restored in the subsequent application. In addition, the material package shown in FIG. 2 is the creator's original material package that has not yet been published, and the file path of the local material has not been replaced, so it shows that some materials can correspond to file paths (that is, the materials can be local materials). Once the local material is published, the file path corresponding to the local material will be replaced with the remote material identifier of the corresponding remote material. All materials in the final material package correspond to resource IDs instead of file paths. In practical applications, the material package provided in an embodiment of the present disclosure comprises, in addition to a set of materials, the material package protocol described above, i.e., the material and its application information, as compared to existing material packages, each of which only comprises a set of materials. The application information indicates how to use the material and how to obtain the material, so that the downloader of the material package can clearly understand how to use each material in the video, and can fully restore the effect achieved by the creator of the material package by using the material in the video.

In some embodiments, to further improve the generation efficiency and the use convenience of the material package, the original editing record file may be left unchanged and a copy of the editing record file may be created, and then the copy is directly processed to obtain the material package. That is, the editing record file can be transformed into a material package, so that the material package (the modified editing record file) can be applied by the downloader of the package directly. Specifically, the downloader of the material package does not need to add each material in the material package to the video one by one. Instead, after the material package is downloaded, the material package can be directly used as an editing record file in a video to be edited, to fully restore the specific way in which the creator uses the material in the video (such as position, rotation, scaling, track, etc.). Based on this, the steps of replacing the acquisition path recorded in the application information of the local material with the remote material identifier of the new remote material, and using the replaced application information as the application information corresponding to the new remote material can be performed in steps a to b below.

In step a, the editing record file is copied to obtain a copy of the editing record file.

In step b, the copy is processed by: deleting the local material comprised in the copy, replacing the acquisition path recorded in the application information of the local material with the remote material identifier of the new remote material, and using the replaced application information as the application information corresponding to the new remote material recorded in the copy. In some specific implementations, the local material and its associated information may be deleted, and the acquisition path corresponding to the local material may be replaced with the remote material identifier based on a mapping relationship, and all the rest may remain unchanged. This simple and clever method, without rewriting the application logic, can change an existing editing record file into a material package that can be used directly.

Based on the above, the step of generating the material package for the video editing based on the new remote material and the application information of the new remote material comprises: generating the material package for the video editing based on the copy processed, wherein the copy processed comprises the remote material identifier of the new remote material and the application information corresponding to the new remote material. Exemplarily, the above process can be implemented through steps (1) to (3) below.

In step (1), a material package cover specified is obtained and the material package cover is uploaded to the server. The material package cover can be specified by the creator, or if not specified, a default material package cover can be used.

In step (2), material package optional information preset is obtained, wherein the material package optional information comprises one or more of: the target video, material version information, or material compatibility information. The target video is an example video edited using multiple materials, which can be comprised in the material package or not based on actual needs. In some embodiments, the target video can be comprised in the material package. In other embodiments, the material package may be made to not contain the target video, but rather the target video may be treated as a material separate from and associated with the material package, so that the material package is as small as possible. Other users can only download the material package and then download or view the target video associated with the material package online when they want to view examples of how to use the material package. The above material version information and the material compatibility information can be considered as belonging to an extra.json extension file, which is used to record some special logic for processing the material package, such as specific application ways of the material package in different terminals. For example, the normal size of a material on iOS is 200 * 200, but the normal size of the material on Android is 300 * 300.

In step (3), the material package cover, the copy processed and the material package optional information obtained are packed and compressed to obtain a compressed package, and the compressed package is used as the material package for the video editing. For example, the material package cover, the copy processed, and the material package optional information obtained can be packed to create a Zip package, which can then be published to a backend server to accomplish the publication and distribution of the material package.

Furthermore, an embodiment of the present disclosure provides a technical implementation for replacing the acquisition path recorded in the application information of the local material with the remote material identifier of the new remote material, comprising: deleting the acquisition path recorded in the application information of the local material; and in the application information of the local material, changing an identification field of the local material to the remote material identifier of the new remote material. In order to identify the download source of each remote material, in some embodiments of the present disclosure, the remote material in the target material carries a material source identifier, wherein the material source identifier is configured to indicate a material storage location of the remote material. The material source identifier can be used to distinguish the platforms from which remote material is downloaded. After the local material of the target material is converted into the new remote material via the server, the remote material identifier of the new remote material can also be obtained via the server. In practical applications, a target platform where the remote material is to be downloaded can be determined based on the material source identifier, and then a corresponding remote material can be downloaded from the target platform based on the remote material identifier. That is, an additional field used to identify the source of the download can be added for each remote material in the material package. For example, the source identification field of the material is source_platform, source_plaform can take values such as 0, 1, 2, 3, 4, etc., different values represent different download platforms. In practice, there are multiple platforms (or servers) that can be used to download the material, and the value can be used as an identifier of the platform from which the material is downloaded. For ease of understanding, an example of changing the identification field of target local material to the remote material identifier (remote_id) and adding a new material source identifier (source_platform) will be given below:
1) video material: replacing material_id in original materials.videos with remote_id, and adding source_platform = 1;
2) audio material: replacing music _id in original materials. audios with remote _id, and adding source_platform = 2;
3) image material: replacing image _id in original materials.image with remote _id, and adding source_platform = 1;
4) sticker material: replacing sticker_id in original materials.image with remote _id, and adding source_platform = 1;
5) text material: deleting the text segment, adding a text template segment, source_platform = 1.

The above are only examples and should not be considered as a limitation. In the application process of the material package, a material acquisition platform can be determined based on the source_platform, and a corresponding remote material can be downloaded from the material acquisition platform based on the remote _id, such that all materials in the material package can be obtained and the material package is applied directly based on the material package protocol.

Based on the above, an embodiment of the present disclosure provides an example of converting a creator's existing editing record file into a new material package for publication. FIG. 3 shows a schematic diagram of a process of generating a material package and illustrates a specific method of converting an editing record file into a material package, on which the execution subject involved in each part is clearly indicated. In the figure, it is shown that the terminal can parse the editing record file to obtain a local material, an original remote material, a material package video, a cover, etc. used by the creator to edit the video. The local material can be published as a remote material through the server, and then a draft protocol (i.e. the editing record file) is modified after obtaining a remote material identifier feedback from the server. Specifically, the modification is to change the acquisition path of the local material to the remote material identifier corresponding to the published remote material. A new material package is obtained after the material package video and the cover, etc., are uploaded to the server and packed with the original remote material and the modified draft protocol, and then the new material package is published through the server. It should be noted that FIG. 3 focuses on explaining that different types of materials (the local material, the remote material, the material package video, or the cover) are processed in different processing methods in the process of generating a material package. For example, the local material need to be published as the remote material through the server, and a protocol modification is made for the local material (changing the acquisition path of the local material in the editing record file to the remote material identifier); the original remote material can be packaged directly without other processing; the material package video and the cover are uploaded to the server for storage and then involved in the packaging. In practice, not all of the above three types of materials may be available. For example, some creators use only the local material (such as a local video, local music, a local sticker, text, etc.) to edit the video, so there will be no the original remote material (such as a sticker, a special effect, a filter, a text template, music, a sound effect, etc.) in the material package. Some creators may choose not to pack a material package video in the material package, so there may be no material package video, etc. However, whatever the case may be, for a creator to produce a material package, the material package will involve the local material.

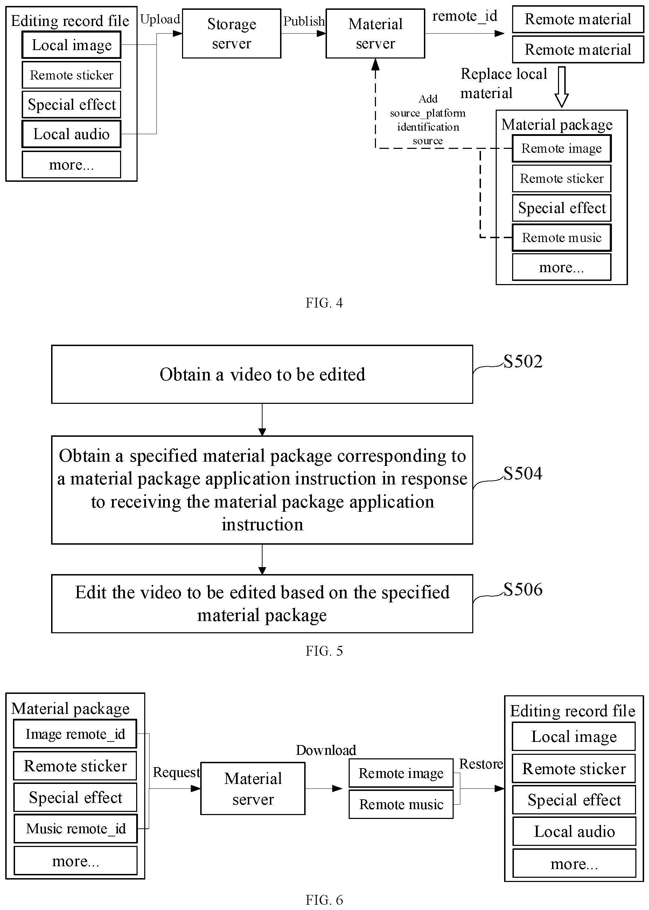

Further, based on the above, an embodiment of the present disclosure provides a schematic diagram of a local material processing process, as shown in FIG. 4, which illustrates the process of publishing the local material as a new remote material. As shown in FIG. 4, the editing record file comprises both the local material (a local image, a local audio) and the original remote material (a remote sticker, a special effect, etc.). The local material can be uploaded to a storage server and published to a material server for public use. For example, after the local material is uploaded to the storage server, a URL and KEY corresponding to the local material can be determined, and then, according to the URL and KEY, the local material is published to the material server to form the remote material. After being published by the server, the remote material identifier (remote_id) can be obtained from the server, and the local material can be replaced with the remote material. Therefore, the generated material package contains only the remote material. Specifically, the original local image has been replaced with the remote image, and the local audio has been replaced with the remote music. In addition, as shown in FIG. 4, a material source identifier (source_platform) can be added for the new remote material to identify the material source.

In some embodiments, the above method further comprises: associating material package title information and material package overview information with the material package in response to receiving the material package title information and the material package overview information.

In practice, a material package title box and a material package overview box can be provided on an interface of the user terminal, so that the creator of the material package can enter a title for the created material package in the material package title box, and enter a theme description of the material package in the material package overview box, so that other a user who downloads the material package can have a clearer understanding of the theme style of the material package, so that the user can quickly decide whether to download the material package based on the need.

In summary, in the method for generating a material package provided in embodiments of the present disclosure, for a generator of a material package, there is no need to extract materials from a video one by one to create the material package, which can simplify the production process of the material package and improve the generation efficiency of the material package. For users of the material package, the use of the material package is more convenient because the material package carries the application information of the material.

When a creator creates an effect video (the target video above) using the material, the creator can determine the required local material according to the needs and publish the material package by a one-click operation, which is very convenient and fast. The material package not only records a set of materials, but also comprises a material package protocol, specifically the location information, scaling information, track information, and other usage record information of each material, as well as the specific way to acquire the material (such as the remote material identifier). For other users, the material can be automatically obtained based on the identifier by a one-click application operation and the display effect of each material in the video is directly restored based on the usage record information. In addition, the material package is directly obtained based on the editing record file, and other users can directly apply the material package as a whole. Compared with the related art in which the material package only contains a set of materials, and the users of the material package are not clear on how to use each material after obtaining the material package and need to adjust repeatedly, the above method provided in the embodiments of the present disclosure improves the convenience of using the material package.

The inventors of the present disclosure further found that in related art, the produced material package is only a set of various materials, and other users do not know how to use the materials in the material package after obtaining the material package, making the use of the material package very inconvenient.

In view of this, an embodiment of the present disclosure further provides a video editing method for improving the convenience of use of the material package.

On the basis of the above method for generating the material package, an embodiment of the present disclosure provides a video editing method. The method is applied to a second client. The second client can be implemented as a mobile phone, a computer, etc., which is not limited in the embodiment of the present disclosure. A consumer user (such as a user of a material package) can use the second client to obtain a material package and use the material package to edit a video. As shown in FIG. 5, the method mainly comprises the following steps S502 to S506.

In step S502, a video to be edited is obtained. The video to be edited can be an original video uploaded by the user and to be edited.

In step S504, a specified material package corresponding to a material package application instruction is obtained in response to receiving the material package application instruction. The specified material package is generated by the method for generating the material package described in any of the above embodiments of the present disclosure, which will not be repeated here.

In some specific implementations, a plurality of target videos are displayed on an interface of the second client in response to detecting an operation that triggers a material package function, wherein each of the plurality of target videos corresponds to one material package; and in response to detecting a selection operation on a target video, it is determined that a material package application instruction is received, and a material package corresponding to the target video selected is used as the specified material package corresponding to the material package application instruction.

In practice, a video editing application can provide users with video editing functions and display the identifiers of multiple video editing functions on the interface of the second client. The video editing function comprises a material package function. When a user (a user of the material package) is detected to click on the identifier or button of the material package function, it can be considered that an operation of triggering the material package function is detected, and a plurality of target videos are displayed on the interface of the second client. The target video is a video generated and published by the creator of the material package. The target video is a video obtained by synthesizing the target material on an initial video through an editing operation. Each target video corresponds to one material package. It can be understood that the creator of a material package can generate and publish multiple material packages. Different target videos displayed by the video editing software on the interface of the second client may be generated and published by different creators of material packages, which is not limited here. By displaying multiple target videos on the interface, the user of the material package can intuitively feel the effect of the material packages in the videos and thus select the required material package. In an embodiment of the present disclosure, when it is detected that a target video is clicked by a user, it is considered that the user needs the material package corresponding to the target video. Therefore, the material package corresponding to the target video can be directly used as the specified material package corresponding to the material package application instruction, which is very convenient, fast, and easy to implement.

In some embodiments, the obtaining of the specified material package corresponding to the material package application instruction comprises: sending an identifier of the specified material package to a server to download the specified material package corresponding to the material package application instruction by the server. In practice, the actual content of the material package can be stored on the server side. When it is determined that the specified material package is required by a user, the second client can directly download the content of the specified material package from the server. The material package can directly contain a material and application information.

In step S506, the video to be edited is edited based on the specified material package.

In some embodiments, the editing of the video to be edited based on the specified material package comprises: synthesizing a material in the specified material package into the video to be edited based on the application information of the material in the specified material package. In practice, the second client can automatically synthesize the material in the material package into the video to be edited based on the application information, according to the content contained in the specified material package. The user of the material package does not need to edit the video using the materials in the material package one by one, which improves the convenience of using the material package.

In summary, an embodiment of the present disclosure provides a video editing method applied to a second client, the method comprising: obtaining a video to be edited; obtaining a specified material package corresponding to a material package application instruction in response to receiving the material package application instruction, wherein the specified material package is generated by the method for generating the material package described above; and editing the video to be edited based on the specified material package. By the above video editing method, since the material package carries the application information of the material, a user of the material package can directly perform video editing based on the material package, making it more convenient to use the material package.

For ease of understanding, after obtaining the specified material package, an embodiment of the present disclosure further provides a process for applying the material package as shown in FIG. 6. FIG. 6 is a schematic diagram showing a specific process of applying a specified material package after the specified material package is downloaded by another user. Based on FIG. 4, FIG. 6 further shows that a remote image and remote music can be downloaded by requesting a material server based on the remote _id of image and the remote _id of music, thereby achieving the restoration of the editing record file. It should be noted that FIG. 6 is only an exemplary illustration that focuses on the restoration process of the local image/audio published as the new remote material during the use of the material package. Therefore, it does not illustrate the application process of the original remote material (such as a remote sticker, a special effect). In a practical situation, the original remote material in the material package also needs to request the material service to download the specific remote material based on the corresponding remote _id. In addition, "local image" and "local audio" recorded in the editing record file in FIG. 6 are mainly used to represent the local image/audio provided by the creator. However, for a downloader of the material package, the material in the material package (which is essentially an editing record file) obtained is the remote material.

As shown in FIG. 6, the material package obtained by the downloader of the material package is essentially an editing record file. As shown in FIGS. 3 and 4, only the local material is replaced with the remote material and the identification field in the editing record file is replaced with the remote material identifier. Essentially, the format of the editing record file is not changed. Therefore, the format of the editing record file restored from the material package is the same as the format of the original editing record file, enabling the effect of each material in the target video to be directly restored in a video that the downloader of the material package needs to edit by a one-click application operation. In this way, the convenience of a user who uses the material package for video editing can be improved.

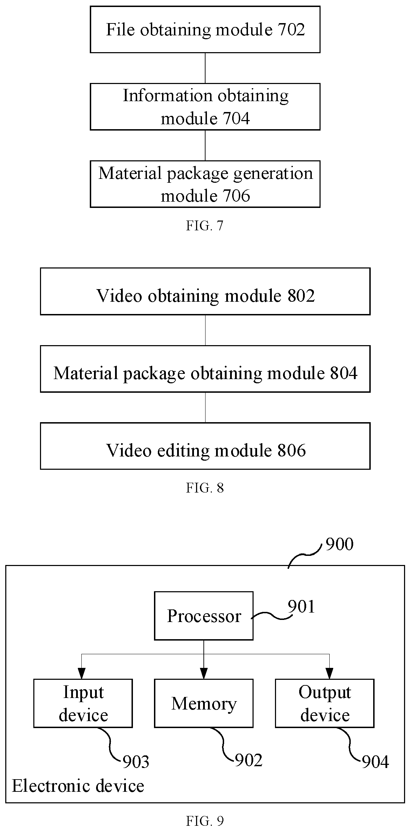

Corresponding to the method for generating a material package described above, an embodiment of the present disclosure provides an apparatus for generating a material package applied to a first client. FIG. 7 shows a schematic diagram of a structure of an apparatus for generating a material package, which mainly comprises: a file obtaining module 702, an information obtaining module 704, and a material package generation module 706.

The file obtaining module 702 is configured to obtain an editing record file of a target video, wherein the target video is a video obtained by synthesizing a specified material into an initial video through an editing operation, and the editing record file comprises editing record information for recording the editing operation, as well as the initial video and the specified material.

The information obtaining module 704 is configured to obtain a target material and application information of the target material based on the editing record file, wherein the application information comprises editing record information of the target material in the target video, and the target material belongs to the specified material.

The material package generation module 706 is configured to generate a material package for video editing based on the target material and the application information of the target material.

For the generator of the material package, with the above device, there is no need to extract materials from a video one by one to create the material package, which can simplify the production process of the material package. For users of the material package, the use of the material package is more convenient because the material package carries the application information of the material.

In some embodiments, the information obtaining module 704 is configured to: use all of the specified material as the target material, or use a material with a publishing license identifier in the target material as the target material; and use the editing record information of the target material in the target video recorded in the editing record file as the application information of the target material, wherein the editing record information comprises one or more of position information, rotation information, scaling information, or track information.

In some embodiments, the application information of the target material further comprises an acquisition path of the target material.

The material package generation module 706 is configured to: upload a local material in the target material to a server to cause the server to convert the local material into a new remote material, wherein the remote material is a material stored in the server and publicly downloadable; receive a remote material identifier corresponding to the new remote material returned by the server, replace the acquisition path recorded in the application information of the local material with the remote material identifier of the new remote material, and use replaced application information as the application information corresponding to the new remote material; and generate the material package for the video editing based on the new remote material and the application information of the new remote material, as well as an original remote material in the target material and the application information of the original remote material.

In some embodiments, the material package generation module 706 is configured to: copy the editing record file to obtain a copy of the editing record file; and process the copy by: deleting the local material comprised in the copy, replacing the acquisition path recorded in the application information of the local material with the remote material identifier of the new remote material, and using the replaced application information as the application information corresponding to the new remote material recorded in the copy.

In some embodiments, the material package generation module 706 is configured to generate the material package for the video editing based on the copy processed, wherein the copy processed comprises the remote material identifier of the new remote material and the application information corresponding to the new remote material.

In some embodiments, the material package generation module 706 is configured to: obtain a material package cover specified and upload the material package cover to the server; obtain material package optional information preset, wherein the material package optional information comprises one or more of: the target video, material version information, or material compatibility information; and pack and compress the material package cover, the copy processed and the material package optional information obtained to obtain a compressed package, and use the compressed package as the material package for the video editing.

In some embodiments, the material package generation module 706 is configured to: delete the acquisition path recorded in the application information of the local material; and in the application information of the local material, change an identification field of the local material to the remote material identifier of the new remote material.

In some embodiments, the remote material in the target material carries a material source identifier, wherein the material source identifier is configured to indicate a material storage location of the remote material.

In some embodiments, the apparatus further comprises an association module configured to associate material package title information and material package overview information with the material package in response to receiving the material package title information and the material package overview information.

In some embodiments, the apparatus further comprises a sending module configured to send the material package generated to a server to enable the server to publish the material package on a specified platform.

The apparatus for generating a material package provided in an embodiment of the present disclosure can execute the method for generating a material package provided in any embodiment of the present disclosure, and has corresponding functional modules to implement the method and achieve the beneficial effect.

Those skilled in the art can clearly understand that, for the convenience and simplicity of description, for the specific working processes of the apparatus embodiments described above, reference can be made to the corresponding processes in the method embodiment, which will not be repeated here.

Corresponding to the above video editing method, an embodiment of the present disclosure provides a video editing apparatus applied to a second client. FIG. 8 shows a schematic diagram of a structure of a video editing apparatus. The video editing apparatus comprises: a video obtaining module 802, a material package obtaining module 804, and a video editing module 806.

The video obtaining module 802 is configured to obtain a video to be edited.

The material package obtaining module 804 is configured to obtain a specified material package corresponding to a material package application instruction in response to receiving the material package application instruction, wherein the specified material package is generated by the method for generating the material package provided by embodiments of the present disclosure.

The video editing module 806 is configured to edit the video to be edited based on the specified material package.

With the above video editing apparatus, since the material package carries the application information of the material, a user of the material package can directly perform video editing based on the material package, making it more convenient to use the material package.

In some embodiments, the apparatus further comprises: a determination module configured to: display a plurality of target videos on an interface of the second client in response to detecting an operation that triggers a material package function, wherein each of the plurality of target videos corresponds to one material package; and in response to detecting a selection operation on a target video, determine that a material package application instruction is received, and use a material package corresponding to the target video selected as the specified material package corresponding to the material package application instruction.

In some embodiments, the material package obtaining module 804 is configured to send an identifier of the specified material package to a server to download the specified material package corresponding to the material package application instruction by the server.

In some embodiments, the video editing module 806 is configured to synthesize a material in the specified material package into the video to be edited based on the application information of the material in the specified material package.

The video editing apparatus provided in the embodiment of the present disclosure can execute the video editing method provided in any embodiment of the present disclosure, and has corresponding functional modules to implement the method and achieve the beneficial effect.

Those skilled in the art can clearly understand that, for the convenience and simplicity of description, for the specific working processes of the apparatus embodiments described above, reference can be made to the corresponding processes in the method embodiment, which will not be repeated here.

An embodiment of the present disclosure provides an electronic device, comprising: a processor; and a memory configured to store executable instructions of the processor; wherein the processor is configured to read the executable instructions from the memory and execute the executable instructions to implement the method for generating the material package or the video editing method provided in the embodiments of the present disclosure. That is, both the first client and the second client can be implemented in the form of electronic devices.

FIG. 9 is a schematic diagram of a structure of an electronic device provided by an embodiment of the present disclosure. As shown in FIG. 9, the electronic device 900 comprises one or more processors 901 and a memory 902.

The processor 901 may be a central processing unit (CPU) or a processing unit in other forms having data processing capability and/or instruction execution capability, and may control other components in the electronic device 900 to perform desired functions.

The memory 902 may comprise one or more computer program products, which may comprise various forms of computer-readable storage media, such as volatile memory and/or non-volatile memory. The volatile memory may comprise random access memory (RAM) and/or cache memory or the like. The non-volatile storage medium comprises, for example, read-only memory (ROM), hard disk, flash memory or the like. One or more computer program instructions can be stored on the computer-readable storage medium, and the processor 901 can execute the program instructions to realize the method for generating a material package or the video editing method or other desired functions of the embodiments of the present disclosure described above. Various contents such as input signals, signal components, noise components or the like can also be stored in the computer-readable storage medium.

In some embodiments, the electronic device 900 may further comprise: an input device 903 and an output device 904, which are interconnected by a bus system and/or other form of connection mechanism (not shown).

In addition, the input device 903 may also comprise, for example, a keyboard, a mouse, or the like.

The output device 904 can output various information to the outside, comprising determined distance information, orientation information, or the like. The output device 904 may comprise, for example, a display, a speaker, a printer, a communication network, a remote output device connected thereto, or the like.

Of course, to simplify, only some components related to the present disclosure in the electronic device 900 are shown in FIG. 9, and components such as buses, input/output interfaces, and the like are omitted. In addition, depending on the specific application, the electronic device 900 may also comprise any other appropriate components.

In addition to the above methods and devices, an embodiment of the present disclosure can also be a computer program product, which comprises computer program instructions that, when executed by a processor, cause the processor to perform the method for generating the material package or the video editing method provided in the embodiments of the present disclosure.

The computer program product may comprise program code complied by any combination of one or more program design languages for executing operations of some embodiments of the present disclose, the program design languages comprising object-oriented program design languages, such as Java, Smalltalk, C++, etc, as well as conventional procedural program design languages, such as "C" program design language or similar program design language. The program code may be completely or partly executed on a user device, or executed as an independent software package, partly executed on the user device and partly executed on a remote computer, or completely executed on a remote computing device or server.

In addition, an embodiment of the present disclosure can also be a computer readable storage medium (e.g., a non-transitory computer-readable medium) having stored thereon computer program instructions that, when executing by a processor, cause the processor to perform the method for generating the material package provided in the embodiments of the present disclosure.

The computer readable storage medium can employ any combination of one or more readable media. The readable medium can be a readable signal medium or a readable storage medium. The readable storage medium can be, for example, but not limited to, an electronic, magnetic, optical, electromagnetic, infrared, or semiconductor system, apparatus, or device, or any combination of the above. More specific examples (non-exhaustive lists) of readable storage media comprise: electrical connection with one or more wires, portable disk, hard disk, random access memory (RAM), read only memory (ROM), erasable programmable read only memory (EPROM or flash), fiber optics, portable compact disk Read only memory (CD-ROM), optical storage device, magnetic storage device, or any suitable combination of the foregoing.

An embodiment of the present application further provides a computer program product comprising a computer program/instructions that, when executed by a processor, implement the method for generating the material package or the video editing method provided in the embodiments of the present disclosure.

An embodiment of the present disclosure further provides a computer program, comprising: instructions that, when executed by a processor, cause the processor to perform the method for generating the material package or the video editing method described above.

Note that, in this description, the relational terms such as "first" and "second" and the like are used solely to distinguish one entity or action from another entity or action without necessarily requiring or implying any actual such relationship or order between such entities or actions. Further, terms "comprise", "include" or their any other variations are intended to encompass non-exclusive composition, so that a process, method, product or device comprising a series of factors may comprise not only these factors, but also other factors that are not listed explicitly, or factors intrinsic to this process, method, product or device. Without more limitation, a factor defined by wording "comprise one..." does not exclude the existence of other same factors in a process, method, product or device comprising such factor.

The above descriptions are only specific embodiments of the present disclosure, so that those skilled in the art can understand or implement the present disclosure. Various modifications to these embodiments will be apparent to those skilled in the art, and the generic principles defined herein may be implemented in other embodiments without departing from the spirit or scope of the present disclosure. Accordingly, the present disclosure should not be limited to the specific embodiments described herein, but should be accorded the broadest scope consistent with the principles and novel features disclosed herein.

## Claims

1. A method for generating a material package, applied to a first client, comprising:
obtaining an editing record file of a target video, wherein the target video is a video obtained by synthesizing a specified material into an initial video through an editing operation, and the editing record file comprises editing record information for recording the editing operation, as well as the initial video and the specified material;
obtaining a target material and application information of the target material based on the editing record file, wherein the application information comprises editing record information of the target material in the target video, and the target material belongs to the specified material; and
generating a material package for video editing based on the target material and the application information of the target material.

2. The method according to claim 1, wherein the obtaining of the target material and the application information of the target material based on the editing record file comprises:
using all of the specified material as the target material, or using a material with a publishing license identifier in the target material as the target material; and
using the editing record information of the target material in the target video recorded in the editing record file as the application information of the target material, wherein the editing record information comprises one or more of position information, rotation information, scaling information, or track information.

3. The method according to claim 1 or 2, wherein the application information of the target material further comprises an acquisition path of the target material.

4. The method according to claim 3, wherein the generating of the material package for the video editing based on the target material and the application information of the target material comprises:
uploading a local material in the target material to a server to cause the server to convert the local material into a new remote material, wherein the remote material is a material stored in the server and publicly downloadable;
receiving a remote material identifier corresponding to the new remote material returned by the server, replacing the acquisition path recorded in the application information of the local material with the remote material identifier of the new remote material, and using replaced application information as the application information corresponding to the new remote material; and
generating the material package for the video editing based on the new remote material and the application information of the new remote material, as well as an original remote material in the target material and the application information of the original remote material.

5. The method according to claim 4, wherein the replacing of the acquisition path recorded in the application information of the local material with the remote material identifier of the new remote material, and the using of the replaced application information as the application information corresponding to the new remote material comprises:
copying the editing record file to obtain a copy of the editing record file; and
processing the copy by: deleting the local material comprised in the copy, replacing the acquisition path recorded in the application information of the local material with the remote material identifier of the new remote material, and using the replaced application information as the application information corresponding to the new remote material recorded in the copy.

6. The method according to claim 5, wherein the generating of the material package for the video editing based on the new remote material and the application information of the new remote material comprises:
generating the material package for the video editing based on the copy processed, wherein the copy processed comprises the remote material identifier of the new remote material and the application information corresponding to the new remote material.

7. The method according to claim 6, wherein the generating of the material package for the video editing based on the copy processed comprises:
obtaining a material package cover specified and uploading the material package cover to the server;
obtaining material package optional information preset, wherein the material package optional information comprises one or more of: the target video, material version information, or material compatibility information; and
packing and compressing the material package cover, the copy processed and the material package optional information obtained to obtain a compressed package, and using the compressed package as the material package for the video editing.

8. The method according to any one of claims 4 to 7, wherein the replacing of the acquisition path recorded in the application information of the local material with the remote material identifier of the new remote material comprises:
deleting the acquisition path recorded in the application information of the local material; and
in the application information of the local material, changing an identification field of the local material to the remote material identifier of the new remote material.

9. The method according to any one of claims 1 to 8, wherein the remote material in the target material carries a material source identifier, wherein the material source identifier is configured to indicate a material storage location of the remote material.

10. The method according to any one of claims 1 to 9, further comprising:
associating material package title information and material package overview information with the material package in response to receiving the material package title information and the material package overview information.

11. The method according to any one of claims 1 to 10, further comprising:
sending the material package generated to a server to enable the server to publish the material package on a specified platform.

12. A video editing method, applied to a second client, comprising:
obtaining a video to be edited;
obtaining a specified material package corresponding to a material package application instruction in response to receiving the material package application instruction, wherein the specified material package is generated by the method for generating the material package according to any one of claims 1 to 11; and
editing the video to be edited based on the specified material package.

13. The method according to claim 12, further comprising:
displaying a plurality of target videos on an interface of the second client in response to detecting an operation that triggers a material package function, wherein each of the plurality of target videos corresponds to one material package; and
in response to detecting a selection operation on a target video, determining that a material package application instruction is received, and using a material package corresponding to the target video selected as the specified material package corresponding to the material package application instruction.

14. The method according to claim 12 or 13, wherein the obtaining of the specified material package corresponding to the material package application instruction comprises:
sending an identifier of the specified material package to a server to download the specified material package corresponding to the material package application instruction by the server.

15. The method according to any one of claims 12 to 14, wherein the editing of the video to be edited based on the specified material package comprises:
synthesizing a material in the specified material package into the video to be edited based on the application information of the material in the specified material package.

16. An apparatus for generating a material package, applied to a first client, comprising:
a file obtaining module configured to obtain an editing record file of a target video, wherein the target video is a video obtained by synthesizing a specified material into an initial video through an editing operation, and the editing record file comprises editing record information for recording the editing operation, as well as the initial video and the specified material;
an information obtaining module configured to obtain a target material and application information of the target material based on the editing record file, wherein the application information comprises editing record information of the target material in the target video, and the target material belongs to the specified material; and
a material package generation module configured to generate a material package for video editing based on the target material and the application information of the target material.

17. A video editing apparatus, applied to a second client, comprising:
a video obtaining module configured to obtain a video to be edited;
a material package obtaining module configured to obtain a specified material package corresponding to a material package application instruction in response to receiving the material package application instruction, wherein the specified material package is generated by the method for generating the material package according to any one of claims 1 to 11; and
a video editing module configured to edit the video to be edited based on the specified material package.

18. An electronic device, comprising:
a processor; and
a memory configured to store executable instructions of the processor;
wherein the processor is configured to read the executable instructions from the memory and execute the executable instructions to implement the method for generating the material package according to any one of claims 1 to 11, or the video editing method according to any one of claims 12 to 15.

19. A computer-readable storage medium on which a computer program is stored, wherein the computer program is configured to perform the method for generating the material package according to any one of claims 1 to 11, or the video editing method according to any one of claims 12 to 15.

20. A computer program, comprising:
instructions that, when executed by a processor, cause the processor to perform the method for generating the material package according to any one of claims 1 to 11, or the video editing method according to any one of claims 12 to 15.
